# DEMANDE DE BREVET EUROPEEN

(11) **EP 1 582 245 A1**
(43) Date de publication de la demande: **05.10.2005**
(21) Numéro de dépôt: 04290872.3
(22) Date de dépôt: 02.04.2004
(51) Int. Cl.: A63H 33/32

(54) **Dispositif ludique permettant d'utiliser un mélange d'eau et de sable à des fins créatives**

(71) Demandeur: Vervust, Damien, 92210 Saint-Cloud (FR)
(72) Inventeur: Vervust, Damien, 92210 Saint-Cloud (FR)

(57) **Abrégé**

L'invention concerne un dispositif, grâce auquel cette expression artistique ludique peut prendre la forme:
- D'une écriture parfaitement lisible.
- De dessins et autres formes planes, libres.
- De volumes ou autres reliefs non-imposés, et en particulier affranchis des contraintes liées à l'usage de moules ou autres objets de même type déjà connus.

Ce dispositif est constitué d'un réservoir (1), contenant le mélange eau/sable (2) et l'eau surnageante (8), muni à sa partie inférieure d'une buse d'écoulement (4), à sa partie supérieure d'un orifice de remplissage (3) et éventuellement d'un couvercle (6), d'une poignée (7) et d'un stylet multi-usage (5).

L'usage ludique et /ou artistique met en oeuvre l'écoulement du mélange eau/sable (2) contenu dans le réservoir (1) à travers la buse (4).

Le dispositif selon l'invention est particulièrement destiné à des jeux de plage, ou à l'expression créative en général.

## Description

La présente invention concerne un dispositif ludique permettant d'utiliser un mélange d'eau et de sable à des fins créatives, telles l'écriture, le dessin, ou la construction de reliefs, dégageant l'utilisateur des contraintes imposées par l'usage de moules et autres objets traditionnels.

En effet, l'usage manuel d'un simple mélange eau/sable ne permet pas de tracer en relief de façon contrôlée des lignes suffisamment précises pour être assimilées à un texte écrit ou à des dessins. D'autre part, l'emploi de moules permet l'obtention d'objets en relief composés de sable et d'eau, de forme et volume contrôlés et précis, mais de façon strictement limitée à la forme et au volume des-dits moules.

De par sa conception, le dispositif selon l'invention permet de s'affranchir de ces contraintes.

Il comporte en effet un réservoir rempli d'un mélange eau/sable et muni à sa partie inférieure d'une buse à travers laquelle s'écoule le-dit mélange eau/sable,de façon fluide et homogène. Ce qui permet de l'utiliser en vue de :
- dessiner et d'écrire de façon nette, lisible, contrôlée et suffisamment durable sur un support quelconque, notamment le sable humide.
- définir des surfaces lesquelles peuvent elles même recevoir des lignes de dessins, ou d'écriture.
- construire des volumes de forme, structure et proportions seulement limitées par l'imagination de l'utilisateur et la cohésion du mélange eau/sable, c'est à dire en pratique, totalement libérés des contraintes géométriques liées à l'emploi des moules traditionnels.

Le dispositif objet de l'invention se présente sous la forme d'un réservoir contenant le mélange eau/sable, muni à sa partie supérieure d'un orifice de remplissage et à sa partie inférieure d'au moins une buse de sortie permettant l'utilisation en vue d'écriture, de dessin, ou de la construction de volumes de forme libre issus de l'imagination, par l'écoulement contrôlé du-dit mélange eau/sable.

Selon des modes particuliers de réalisation :
- Le réservoir comporte de préférence une buse interchangeable, les différentes buses présentant des diamètres différents de manière à pouvoir s'adapter à la volonté créatrice, et à la viscosité du mélange eau/sable. Mais on peut également envisager une buse unique rotative munie d'orifices de diamètres différents, voire plusieurs buses fonctionnant simultanément.
- Le dispositif peut être complété d'un stylet, permettant de tracer un modèle sur la surface support choisie : lignes ou écriture, à réaliser ensuite avec le dispositif objet de l'invention et ce, avec ou sans utilisation de pochoir.

Ce stylet peu, avec intérêt, être conçu de façon à servir à déboucher la buse d'écoulement en cas d'obstruction de celle-ci.

Le stylet peut judicieusement être rangé dans un logement disposé sur une des parois du réservoir.
- Le réservoir peut être muni d'un couvercle, lequel peut lui-même être muni d'un système de préhension, en sorte qu'il peut faire office de système de préhension du dispositif.
- Le dispositif objet de l'invention peut être muni d'une poignée de préhension, laquelle peut servir de logement au stylet de traçage et de débouchage de la buse.
- Le corps du réservoir peut, avec intérêt, être constitué d'une matière transparente ou translucide, ce qui permet immédiatement la vérification visuelle du niveau des deux constituants dans le-dit réservoir.
- le dispositif peut prendre la forme d'un stylo-plume, ou de tout autre système d'écriture connu.

Le dessin annexé illustre l'invention.

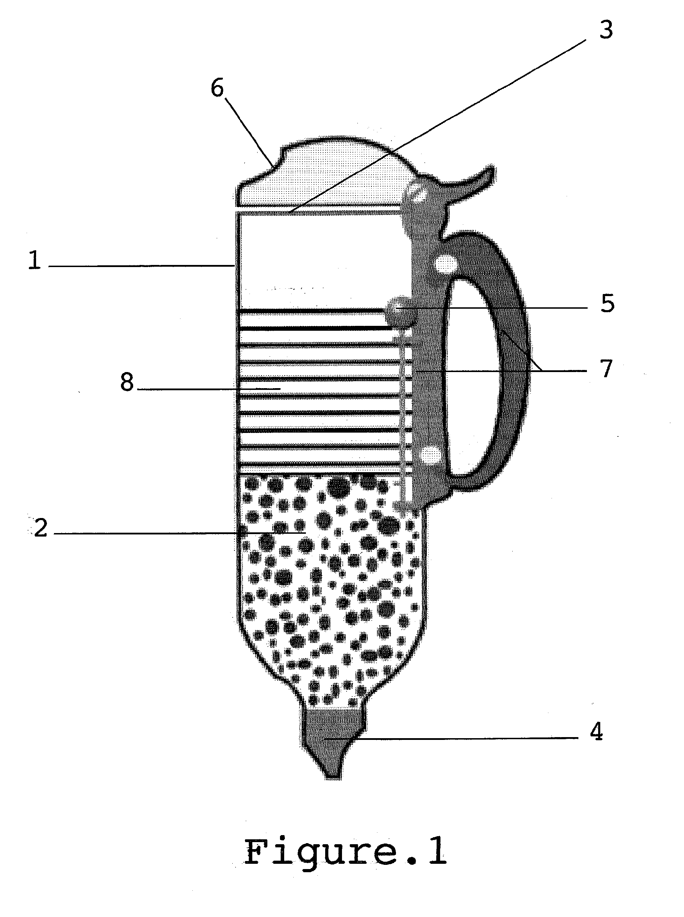

- La figure 1 représente le dispositif de l'invention.

En référence à ce dessin le dispositif comporte: un réservoir (1) contenant le mélange eau/sable, muni à sa partie supérieure d'un orifice de remplissage (3) et d'une buse de sortie (4) et optionnellement d'un stylet (5), d'un couvercle (6), et d'une poignée (7).

Le dispositif objet de l'invention permet une expression ludique et /ou artistique de la part de l'utilisateur, selon son imagination, son inspiration et son adresse.

Pour l'utiliser en pratique, il suffit de :
- remplir le réservoir d'un mélange d'environ 40% (en volume) de sable et 60% (en volume) d'eau, en particulier en raclant la partie du rivage immergée et accessible. Il est recommandé de s'assurer que l'eau est en excès par rapport au sable, et surnage (8) au dessus du sable décantant dans le réservoir.
- obstruer la buse de vidange, par exemple avec le doigt, pour empêcher le dispositif de se vider prématurément.
- se porter vers le support choisi et préparé pour l'application (sable humide, éventuellement lissé)
- libérer la buse pour permettre l'écoulement du mélange et la réalisation de la figure désirée.Du fait de ses propriétés d'écoulement tixotropique le mélange eau/sable en mouvement s'écoule facilement et de façon fluide à travers la buse sous la seule force de pesanteur. Et, une fois déposé sur le support choisi, il s'y immobilise immédiatement en se figeant dans la forme et le volume donnés par la buse et la main de l'utilisateur.

A titre d'exemple non limitatif le dispositif sera constitué d'un réservoir cylindro-conique de diamètre principal 80mm et de hauteur totale de 300mm, ouvert à son extrémité supérieure et muni à son extrémité inférieure d'un orifice de vidange de 4mm de diamètre. Le dispositif selon l'invention est particulièrement destiné à des jeux de plage, ou à l'expression créative en général.

## Revendications

1. Dispositif ludique créatif permettant l'emploi d'un mélange eau/sable, en vue de l'écriture, du dessin et de l'élaboration d'objets en relief, de forme et volume non-imposé.

2. Dispositif ludique selon la revendication (1), composé d'un réservoir et d'une buse de sortie du mélange, selon le schéma de principe Figure 1.

3. Dispositif ludique selon la revendication (1), dans lequel la buse d'écriture peut être munie d'orifices de diamètre adapté à l'usage créatif souhaité et à la viscosité du mélange eau/sable utilisé. Exemple:4.

4. Dispositif ludique selon la revendication (1), muni d'un stylet permettant à la fois de tracer des modèles sur la surface support, et de déboucher les buses le cas échéant. Exemple:5.

5. Dispositif ludique selon la revendication (1), muni d'un couvercle pouvant faire office de système de préhension.Exemle:6.

6. Dispositif ludique selon la revendication (1), muni d'une poignée pouvant faire office de logement pour le stylet selon revendication (5).Exemple:7.
